Europäisches Patentamt

European Patent Office

Office européen des brevets

(19)

(11) Publication number: 0 311 393
A2

# EUROPEAN PATENT APPLICATION

(21) Application number: 88309308.0

(22) Date of filing: 06.10.88

(51) Int. Cl.⁴: **B 23 K 1/08**
**H 05 K 3/34**

(30) Priority: **07.10.87 US 105237**

(43) Date of publication of application:
**12.04.89 Bulletin 89/15**

(84) Designated Contracting States:
**AT BE CH DE ES FR GB GR IT LI LU NL SE**

(71) Applicant: **CORFIN TECHNOLOGIES INC.**
**2001 Champlain Boulevard**
**Chambly Quebec J3L 4W8 (CA)**

(72) Inventor: **Cornellier, Rene J.**
**66 Hautbois**
**Ste Jullie Quebec J0L 2SO (CA)**

(74) Representative: **Archer, Philip Bruce et al**
**Urquhart-Dykes & Lord Trinity Court Trinity Street**
**Priestgate**
**Peterborough Cambridgeshire PE1 1DA (GB)**

(54) Tinning system for axial and radial leaded components.

(57) There is provided a method and apparatus for the tinning or hot solder coating of electronic components and particularly axial and radial leaded components. The apparatus utilizes gripping fingers to grasp the component by the body and maintain the leads horizontal while they are being tinned; preferably, an inert atmosphere is maintained to prevent icicling.

FIG. 1

EP 0 311 393 A2

## Description

The present invention relates to a method and apparatus, and more particularly, it relates to methods and apparatuses for tinning electronic components.

The tinning of electronic components comprises the step of applying a hot solder coating to the metallic leads of the component package. This tinning of components prior to placement on the circuit board is well know in the art and it has become necessary in order to provide high quality and reliable solder connections during the subsequent soldering operation. In the normal manufacturing cycle, a component may be stored for a substantial period of time before being utilized. During this storage period, leads can become oxidized or otherwise subject to deleterious conditions such that when the components are later placed on the circuit board and that board assembly then soldered (normally through an automated soldering system), an oxidized lead may not solder properly thus leading to a board fault or defect. Accordingly, many manufacturers have found it advisable to solder coat the leads and components prior to use of the components such that when the components are later placed on the printed circuit board, the solder reflows and a good solder connection is assured.

To date, many different types of systems have been in use for tinning the components. These range from fully automated in-line systems such as illustrated in U.S. Patent 4,654,227 dated March 31, 1987 wherein the component is grasped by mechanical means and carried through the required processing steps to smaller systems wherein the components are inserted into some type of tooling or fixturing and then subsequently processed. Much of the above depends upon the type of component to be tinned. Because of the problem of handling many different types of components, there are still a number of components that are manually tinned. One particular problem encountered in the industry relates to what are known as axial and radial leaded components. Axial leaded components are generally defined as those components with a somewhat elongated (normally cylindrical) body with a lead emerging from either end thereof parallel to the body axis. Typical of conventional axial leaded components are resistors, diodes, etc. Radial leaded components, on the other hand, come in many different body configurations and have at least one (normally a plurality) lead extending outwardly from the body. Typical of such packages are TOs, capacitors, etc.

For the tinning of the components, several factors are important. It is required in the industry that the solder coat be a smooth one with few, if any, imperfections and that the coating does not form any icicles or flags at the end of the lead. This icicling is a common problem in the art and generally occurs at the very end of the lead as it emerges from the hot solder. To date, most systems for tinning of these types of components are robotic types wherein the leads are dipped in a hot solder bath and withdrawn such that the axis of the lead is perpendicular to the solder surface as it emerges therefrom. It has, however, been known in the art to vary from this perpendicularity such as shown in U.S. Patent 4,573,430 issued March 4, 1986, wherein the leads are inclined at an angle and a vacuum is used to remove the icicles from the leads.

It is an object of the present invention to provide an automated system for the tinning of axial and radial leaded components wherein the leads are carried substantially horizontally while eliminating icicles on the leads.

It is a further object of the present invention to provide a method and apparatus for the tinning of axial and radial leaded electronic components wherein the components are processed individually and both leads are treated in a single pass in-line operation.

It is a further object of the present invention to provide a method and apparatus for the tinning of axial and radial leaded components wherein the components are fed on a tape to the system and are placed back on the tape automatically.

It is a further object of the present invention to provide a method and apparatus for the tinning of axial and radial leaded components wherein different component sizes may be tinned by the same system with minimum adjustment.

The tinning system of the present invention utilizes an endless closed loop conveyor having an input position and an output position with a plurality of processing stations intermediate the input position and the output position. The conveyor has a plurality of gripping devices mounted thereon with each device being adapted to grip a component at the input station and release the component at the output station. The embodiments illustrated herein show a closed loop conveyor in a vertical configuration; a horizontal configuration may equally well be used.

A typical tinning system will have a number of processing stations. Normally these processing stations will include a fluxing station (which may either be foam or of the wave form type), a preheat station wherein the leads are heated to dry (and activate) the flux; a solder station wherein the leads are passed through molten solder to tin the surfaces; and a cleaning station wherein any remaining flux is removed along with any other contaminants. It will be understood that other processing stations may be added or deleted as desired; for example, a precleaning station may be included and multiple solder applications may be utilized as will be shown herein.

As above mentioned, the conveyor carries a plurality of gripping means and preferably, these gripping means are of a general configuration similar to that of U.S. Patent 4,654,227. Thus, the gripping means would comprise a pair of fingers adapted to engage and retain the component bodies such that the leads thereof may be subjected to the required tinning steps. The fingers are adapted to open when they reach the input station or a position and close once the component body has been placed between the fingers. Similarly, at the output station or position, the fingers are opened to release the components.

The opening and closing of the fingers may be accomplished using a cam action. Thus, one of the fingers may be a fixed finger while the other finger is moveable between first and second positions by action of a cam surface on a portion of the finger. In the alternative, both fingers may be moveable in opposite directions, both either being operated by cam or other means for opening and closing the devices. Preferably, the fingers are formed such that they carry replaceable tips so as to be easily interchangeable to grip different size components. While one tip configuration may carry a range of components, a wide variance in body sizes would preferably utilize different finger tips. The finger tips would be of titanium for resistance to the soldering process.

The processing stations themselves, as aforementioned, are known in the art. A "standard" configuration would include a fluxing station which is adapted to apply a flux to the metallic leads of the components. One may utilize either a foam or wave type fluxer; preferably, the fluxer nozzle is adjustable so as to accommodate different size components without applying excess flux to the component body.

The preheating station is designed to preheat the leads of the components. This removes excess volatiles from the flux and in the case of certain types of RMA fluxes, the preheating is required to properly activate the flux prior to soldering.

The soldering station, according to the present invention, can take several different forms. As previously mentioned, the component is carried substantially horizontally and problems have previously been encountered with the formation of icicles on the leads. To overcome this, in one embodiment of the invention, the wave of the wave solder equipment is designed such that it is angled with respect to the direction of travel of the component whereby the lead is progressively withdrawn from the solder such that the tip of the lead emerges from the solder at an angle of between 30° and 90°.

In a further embodiment, the nozzle of the wave solder machine may be designed such that both leads are tinned simultaneously. This V-shaped wave would utilize two waves angled with respect to each other and to the direction of travel of the component. Means may be provided for adjusting the nozzle or in the alternative, different nozzles may be utilized for different size components.

As mentioned, it may sometimes be desirable to utilize different nozzles. This will depend upon whether the component body can be immersed in the solder. If immersion is not a problem, a single nozzle (non-adjustable) can be utilized for substantially all components. If, on the other hand, it is desirable that the component body not "see" the solder, adjustment of the nozzle is required and/or different nozzle configurations must be utilized.

In a further embodiment of the invention, a dual solder pot arrangement may be utilized wherein a single fixed angled nozzle is employed for each lead. In this configuration, the solder pots themselves can be linearly moveable such that proximity to the body of the solder can be achieved by movement of the pot. This arrangement has the advantage that mechanical adjustments are not required within the molten solder.

In a preferred embodiment of the invention, the environment surrounding the component as it passes through the wave is controlled to be an inert atmosphere. This inert atmosphere is advantageous in that it prevents oxidation on the surface of the molten solder and accordingly, a smoother more continuous coating is obtained. In addition, the inert atmosphere eliminates the formation of icicles. A preferred material for the inert atmosphere is nitrogen. The use of an inert atmosphere also has the additional advantage of minimizing oxidation of the solder and the subsequent formation of dross.

The inert atmosphere is preferably created by placing a chamber about the portion of the solder pot containing the wave and diffusing the inert gas about the wave. This gradual diffusion reduces the oxygen content within the chamber to generally less than .5% and is sufficient to provide good results.

After exiting from the solder pot, the component then may be cleaned on an in-line basis. Due to the singulated nature of the components, they may either go into an aquaous cleaning or a solvent cleaning (depending on the type of flux employed). This cleaning in-line immediately after immersion from the wave ensures a most effective removal of all contaminants from the component.

The feeding of the components to the fingers on the conveyor is accomplished through a singulating unit. This singulating unit has a mouth to accept the components and a zig zag slide through which the components pass to maintain their correct alignment. The use of such slides is well known in the art. At the bottom of the zig zag slide, a pickwheel is provided which removes each component individually and places it on a stop member from where it is picked up by the fingers. The pickwheel is synchronized with the speed of the conveyor.

Normally, both axial and radial components come in bulk form or on tape and reel. The system of the present invention can handle either component. To this end, when the components are supplied in bulk, a conventional vibrating bowl feed may be utilized.

In the tape mode, the components are passed through a detaping device wherein the tape is removed mechanically. To this end, there may be provided a detaping device which utilizes a series of cam-operated fingers extending between the leads to mechanically stretch the tape and remove it from the ends of the leads.

At the output end, the fingers can be designed to release the component into a taping machine. Taping machines are well known in the art and it is merely a matter of dropping the components into the input end of the taping system.

In a still further aspect of the present invention, there is provided a system for the tinning of components which are on tape. In this embodiment, processing stations similar to those previously described are provided - i.e. a fluxing station, a preheating station (optional), a soldering station and a cleaning station. Drive means are provided for transporting the components through the processing stations and in this respect, depending on the component configuration, the drive means may be adapted to engage the taped portion of the leads and/or the body. Generally, the components to be tinned will be axial or radial leaded components and the leads will be maintained substantially horizontally. An adjustable nozzle for both the fluxing station and soldering station will tin only that portion desired - i.e. between the body and the tape. In order to prevent contamination of the tape, means are provided to prevent the flux and cleaning fluid from reaching the tape.

This generally describes the invention, reference will be made to the accompanying drawings illustrating embodiments thereof, in which:

Figure 1 is a front elevational view of one embodiment of a tinning system;

Figure 2 is an elevational view of the bulk feeder input;

Figure 3A is a top view of an embodiment of a fluxing station;

Figure 3B is a cross sectional view of the fluxing station of Figure 3A;

Figure 4A is a top view of a solder pot;

Figure 4B is a side elevational view thereof;

Figure 4C is a top view of another embodiment utilizing dual solder pots;

Figure 4D is a cross sectional view of a solder pot utilizing an inert atmosphere;

Figure 5A is a top view of the cleaning station;

Figure 5B is a cross sectional view of the cleaning station of Figure 5A thereof;

Figure 6 is an expanded, side elevational view of the release of the components at the output station;

Figure 7 is a detailed view of a gripping device utilized in the system; and

Figure 8 is a perspective view of a further embodiment of a tinning system for taped components.

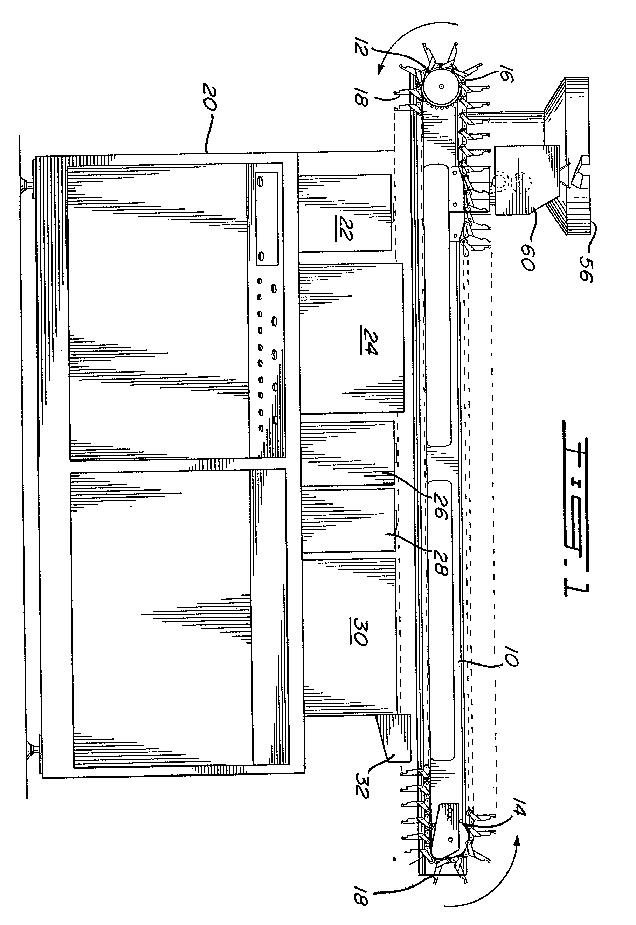

Referring to the drawings in greater detail and by reference characters thereto, a typical tinning system is shown in Figure 1. This system includes a conveyor beam 10 which may be mounted on suitable posts (not shown), and which conveyor beam has sprocket wheels 12 and 14 mounted at opposite ends. Entrained about sprocket wheels 12 and 14 is a conveyor chain 16 which has mounted thereon a plurality of finger assemblies generally designated by reference numeral 18. Finger assemblies 18 grip the components and carry them through the processing operations as will be discussed in greater detail herein below.

Typical of the processing station which might be utilized in a tinning operation are a fluxing station 22, a preheat station 24, a first tinning station 26, a second tinning station 28, a cleaning station 30 and a drying station 32. These stations are mounted on a base 20 which houses the controls for the system.

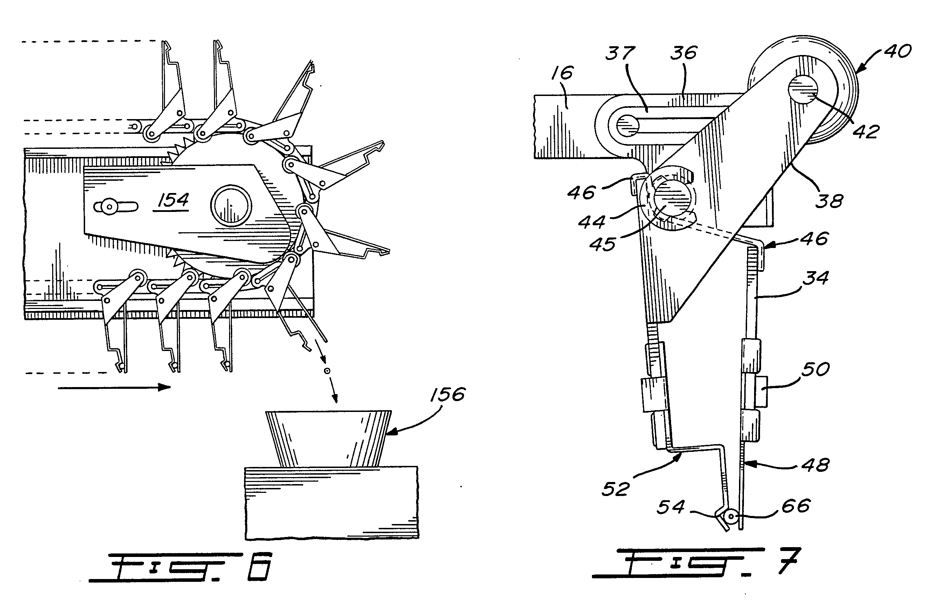

A finger assembly 18 is illustrated in greater detail in Figure 7 and reference will now be made thereto. Finger assembly 18 comprises a first finger generally designated by reference numeral 34, and which finger 34 includes a base portion 36 adapted to fit on the conveyor chain 16. A clip 37 retains finger 34 thereon. A second finger 38 has a roller 40 mounted about shaft 42 for reasons which will become apparent hereinafter. Finger 38 is journalled on shaft 45 and retained thereon by retaining ring 44. A spring member 46 (only partially shown) functions such as to normally bias finger 38 towards finger 34.

Finger 34 has a finger tip 48 which is located thereon by a notch 50. Thus, finger tip 48 may be easily removed and replaced with notch 50 serving to locate the correct positioning thereof. Similarly, a finger tip 52 having a notch 54 formed therein is provided to center component 66 in the correct location for processing.

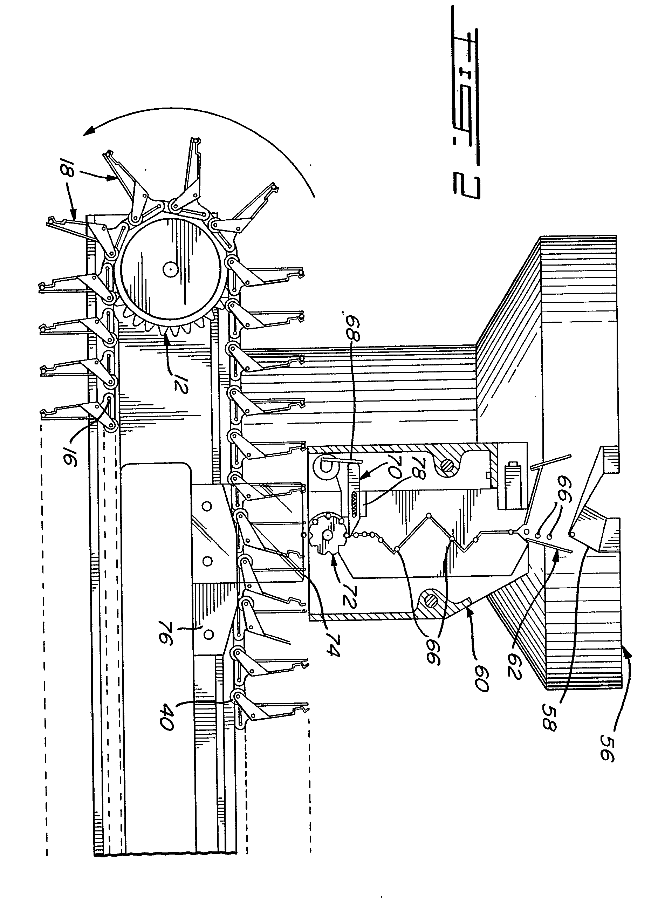

Figure 2 illustrates the feed in of loose axial components 66 and reference will now be made thereto. In this arrangement, a vibratory bowl 56 feeds component 66 down chute 58 to hopper 62 of a zig zag unit. Both vibratory bowl 56 and zig zag unit 60 are of the type well known in the art. After passing down the zig zag chute, the leads of the axial components rest on a pair of singulating arms 70. Singulating arms 70 are driven in a linear direction by a plate 68 which in turn is driven in synchronization with the speed of conveyor 16. Spring members 78 function to urge plate 70 to a normally retracted position. As it is desired to feed the components, singulating arm 70 are retracted and a single component is allowed to fall such that the leads are supported by notches in transfer wheels 72 (only one shown). In turn, transfer wheels 72 rotate to transfer the component through 180 degrees and drop the component on support plate 74 which supports the component by its leads. As may be seen from Figure 2, a cam 76 engages roller 40 to open finger 38. Subsequently, finger 38 closes on the body of the axial component 66 to grasp it and carry it through the processing steps.

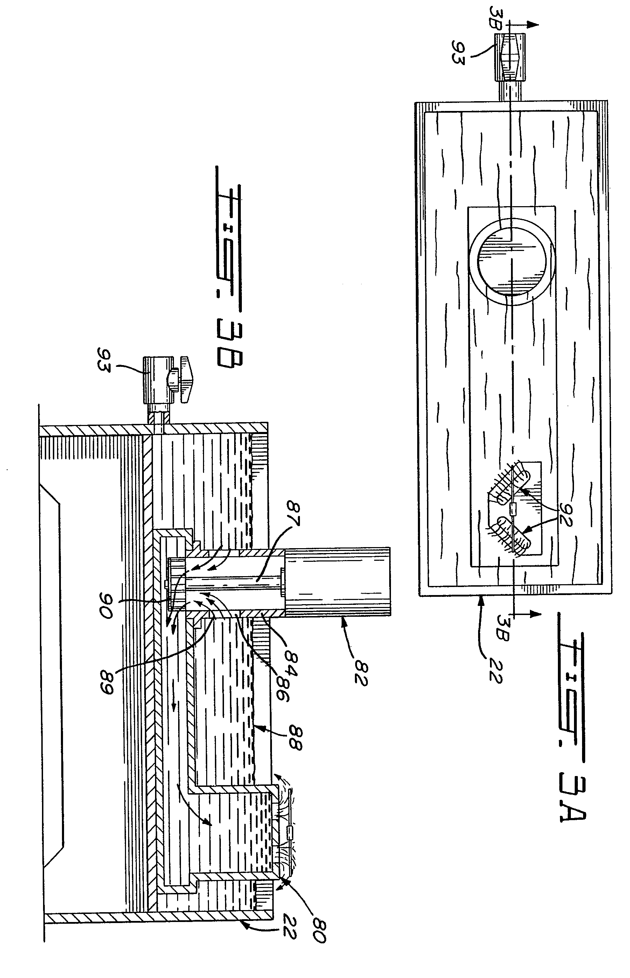

Figures 3A and 3B illustrate a typical fluxing unit used to apply flux to the leads of axial leaded components. As may be seen, fluxing station 22 consists of a container having a liquid flux 88 therein. A motor 82 is mounted on a stand 84 which has apertures therein to permit free passage of flux 88 therethrough. Shaft 87 from motor 82 drives an impeller generally designated by reference numeral 90. Impeller 90 forces the flux in the direction shown by the arrows up a chimney 80 from which it exits as two waves 92. Each wave is adapted to tin one lead of the axial component as it passes therethrough. A drain valve 93 is provided for flux removal when required.

Preheat station 24 is of a conventional construction and may either utilize heating by radiation or convection as desired.

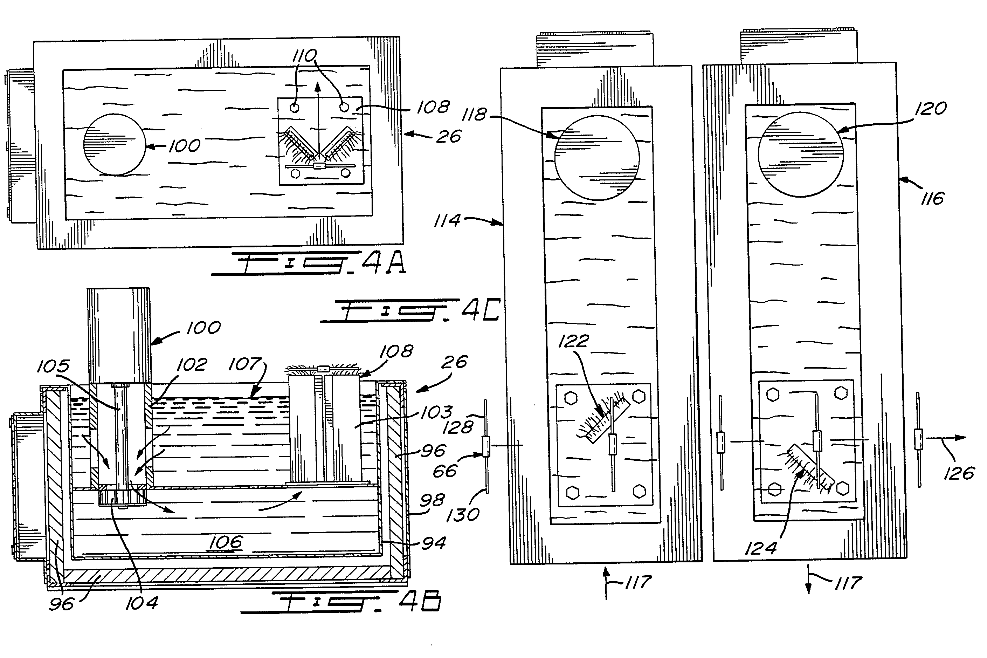

One version of a tinning station 26 is illustrated in Figures 4A and 4B and will now be discussed.

Tinning station 26 comprises an inner solder pot 94 surrounded by insulation 96 and an outer pot or casing 98. Intermediate inner pot 94 and outer pot 98 are heaters (not shown). Molten solder 107 is contained within inner pot 94. A pump 100 is mounted on a support 102 which has apertures therein to permit the molten solder to flow therethrough to an impeller 104 which pumps the molten solder from a sump or lower chamber 106 up a chimney 108. As shown in Figure 4A, chimney 103 terminates in a pair of nozzles which create dual waves 108 having an overall V-shaped configuration.

Referring to Figures 4C and 4D, an alternative arrangement for the tinning station is shown. In this embodiment, first and second solder pots 114 and 116 respectively are utilized. Solder pot 114 has its own motor 118 associated therewith while solder pot 116 utilizes a motor 120 to pump the solder up the chimney. The structural arrangement is the same as that shown in Figures 4A and 4B except that each solder pot only has one half of the wave structure therein. Thus, solder pot 114 has a wave 122 while solder pot 116 has a wave 124, with waves 122 and 124 adapted to a tin lead 128 and 130 respectively of component 66. The advantage of this arrangement is that each solder pot may be mounted on suitable means such as Thompson shafts and linear bearing whereby they are moveable as shown by arrows 117. Since waves 122 and 124 are fixed, movement of the solder pot allows precise placement of the wave with respect to the components and component bodies. When they thus come as close as required to the component body without touching the body.

In the embodiments illustrated in Figures 4A, 4B and 4C, it will be noted that the waves discharge towards the component as it advances to the solder waves. Each wave is also angled with respect to the lead such that the molten solder will first contact the portion to the lead closest to the body and subsequently travel to the end of the lead. As may be seen, the end of the lead is drawn from the solder at an angle to minimize any icicling. The closer this angle is to 90 degrees between the wave and the axis of the lead, generally the better results achieved, again depending on the specific lead geometry. Naturally, if so desired, a somewhat different wave arrangement could be utilized wherein each side of the wave (in the embodiment of Figure 4C) has a V-shaped configuration such that the free end of the end first contacts the solder following by gradual immersion of the rest of the lead in the solder and withdrawal in the manner previously described. Preferred angle of the withdrawal are in excess of 45 degrees.

A still further embodiment of a soldering station is illustrated in Figure 4D. In this embodiment, an arrangement similar to that shown in Figure 4A is utilized with similar reference numerals being employed. Thus, there is provided an inner solder pot 94 containing molten solder 107. A motor 100 mounted on a stand 102 has a shaft 105 operatively connected to and driving impellor 104. The solder is pumped through sump 106 up chimney 108 in a dual wave configuration to tin component 66. In this embodiment, there is provided a chamber 132 which substantially encloses the area about chimney 103 and waves 108. A see-through glass material 134 is provided in the walls of chamber 132. An inert gas supply line 136 is provided and a defuser 134 permits the defusion of the inert gas. A preferred gas is nitrogen. The defusion of the nitrogen about the wave substantially removes most of the oxygen content of the ambient atmosphere about the wave. This inert atmosphere has been found to provide a superior tinning performance. It is preferred that the oxygen be kept below 1% and preferably below about .5% by volume.

The use of the inert atmosphere is illustrated with the dual wave. It is equally desirable for use with the two-solder pot arrangement as shown in Figure 4C.

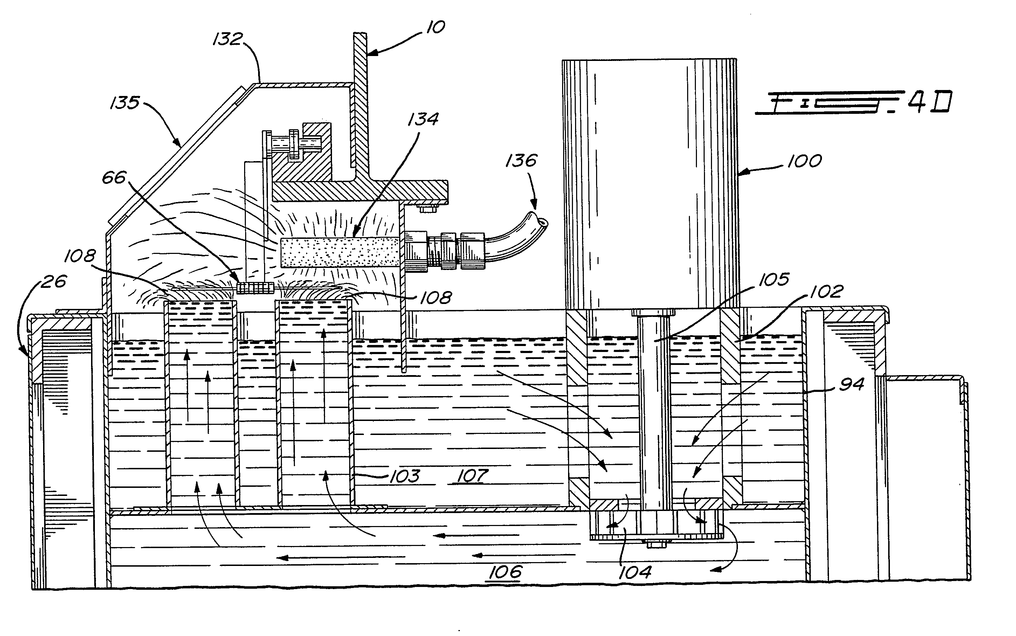

Figure 5 illustrates cleaning station 30. Cleaning station 30 is comprised of a bath formed of a suitable material (depending upon the cleaning fluid being utilized) and generally comprises a wash section 138 and a rinse section 140. In operation, cleaning fluid is fed in through a nozzle 151 into rinse section 140. The arrangement of both sections 140 and 138 is similar and wash section 138 is shown in greater detail in Figure 5B. In this arrangement, a motor 142 mounted on support 144 drives an impeller 146 through shaft 145. The cleaning fluid is pumped up a chimney 148 through which the component 66 passes. The cleaning fluid is selected to clean the flux and other residues from the component.

Rinsing section 140 is similar in operation. As previously mentioned, cleaning fluid is fed through inlet 151 to bath 140 from which it is allowed to overflow into wash section 138. The continuous overflow is provided out through valve 150. This cascading action provides that the part is initially washed with slightly dirty fluid in section 138 while undergoing a final rinse with clean fluid.

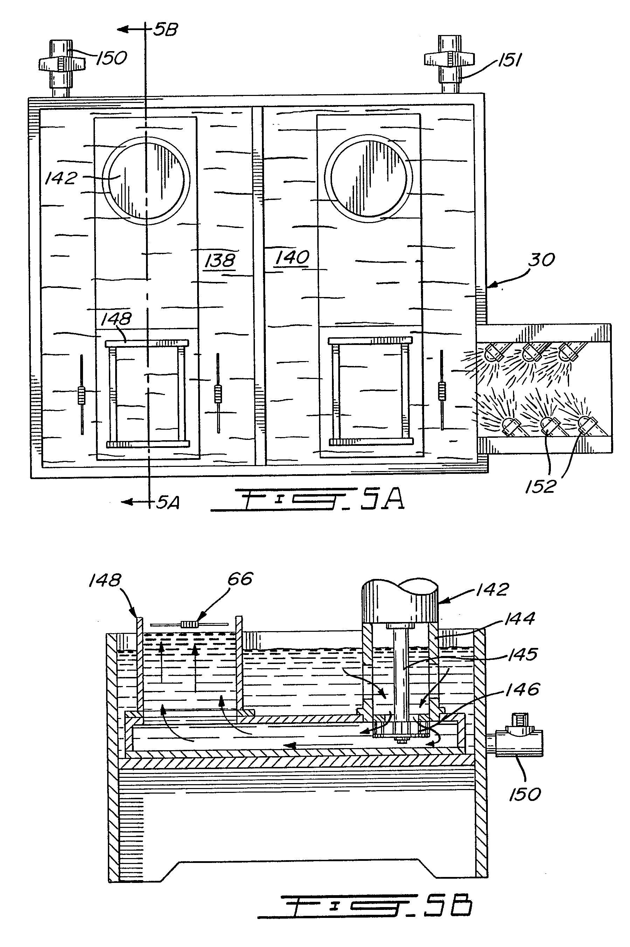

Subsequent to passage through wash section 138 and rinse section 140, component 166 is dried using compressed air blown through nozzles 152. Finally, as shown in Figure 6, a cam 154 causes the fingers to open and drop the components into the mouth 156 of a taping system (not shown) from where they may be put on tape ready for insertion into the board.

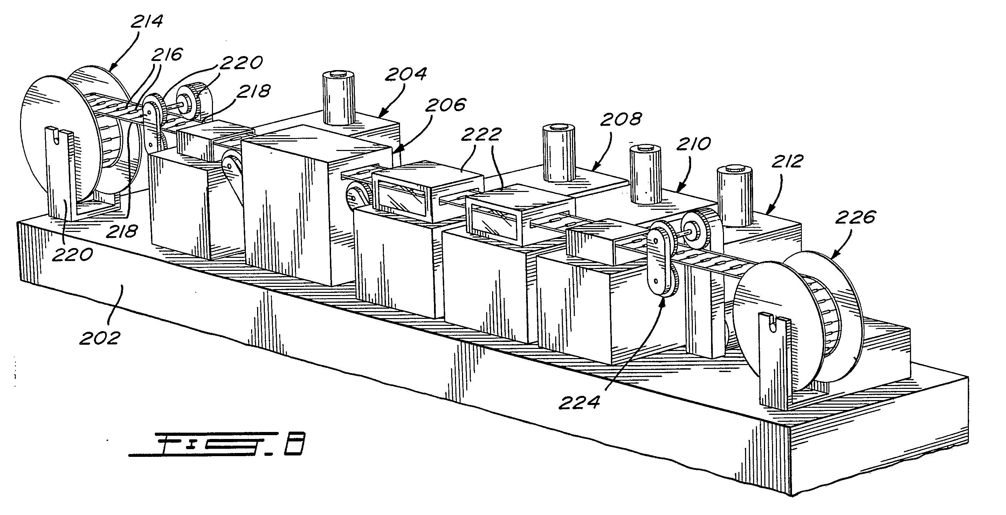

Referring to figure 8, there is illustrated a system for tinning axial leaded components which remain on tape. This system includes a base 202 upon which are mounted a fluxing station 204, a preheating station 206, first and second soldering stations 208 and 210 respectively, and cleaning station 212. Each of these stations has been previously described and will not be discussed in greater detail herein. Suffice it to say that first and second wave soldering stations 208 and 210 include a cover 222 which permits the introduction of an inert atmosphere about the wave. The wave format itself may be designed to be similar to those previously discussed.

A reel 214 is mounted on a stand 220. Components 216 are held at either edge by a tape 218 as is conventional and well known in the art. From reel 214, the components are fed through rollers 220 and subsequently through the various processing stations. Following cleaning, the components again pass between rollers 224 onto take up reel 226. Reel 226 is a driven take up reel by suitable means (not shown).

It will be understood that the above described embodiments are for purposes of illustration only and that changes and modifications may be made thereto without departing from the spirit and scope of the invention.

**Claims**

1. A system for the tinning of electronic components which have a body and at least one lead extending from the body, this system comprising means for gripping the body whereby said lead extends in a substantially horizontal plane, a fluxing station to apply flux to said lead, a soldering station creating a wave of molten solder, means for maintaining the oxygen content about said wave less than about 1%, and means for transporting said component through said fluxing station and said soldering station.

2. A system for the tinning of electronic components which have a body and at least one lead extending from the body, the system comprising means for gripping the body whereby said lead extends outwardly in a substantially horizontal plane, a fluxing station, a soldering station, means for transporting said component past said fluxing station where flux is applied to said lead, said soldering station having means for creating a wave of molten solder, said wave being shaped such that as the lead is passed through said wave, the lead is progressively withdrawn such that the last portion to emerge from the wave is the free end of the lead.

3. A system for the tinning of taped electronic components which have a body and at least one lead extending from the body, the system comprising means for mechanically removing said tape from said leads by stretching the tape in a direction parallel to the axis of the leads, a chute adapted to receive the components removed from the tape, means for singulating the components at the bottom of the chute and placing said components on a support means whereat the component is supported by its leads, an endless conveyor having a plurality of gripping means thereon, each gripping means adapted to grip one component by its body at said support plate, a fluxing station, a soldering station, means for releasing said components at an output station into a taping machine whereupon the components are placed back on tape.

4. A system for the tinning of taped axial or radial leaded components comprising the steps of supporting said components such that the leads of the components extend in a horizontal plane, means for applying flux to said leads between said body and said taped portion, means for preventing said flux from reaching said tape, means for applying solder to that portion of the leads having flux thereon, and means for cleaning said tinned portion and preventing cleaning fluid from contacted said taped portion.

Fig. 1

FIG. 2

EP 0 311 393 A2

FIG. 3B

FIG. 3A

FIG. 4B

FIG. 4A

FIG. 4C

Fig. 4D

FIG. 5A

FIG. 5B

Fig. 6

154

156

Fig. 7

52

54

66

48

50

34

46

38

42

40

45

44

46

37

36

16

FIG. 8

EP 0 311 393 A2